# EUROPÄISCHE PATENTANMELDUNG

(11) **EP 2 546 482 A1**
(43) Veröffentlichungstag der Anmeldung: **16.01.2013**
(21) Anmeldenummer: 12175834.6
(22) Anmeldetag: 11.07.2012
(51) Int. Cl.: F01M 13/00, F16K 49/00

(54) **Heizeinrichtung einer Fluidleitung**

(30) Priorität: 12.07.2011 DE 102011107662
(71) Anmelder: MANN + HUMMEL GMBH, 71638 Ludwigsburg (DE)
(72) Erfinder: Pfeiffer, Dr. Frank, 71297 Mönsheim (DE); Döskaya, Nurettin, 71636 Ludwigsburg (DE); Schleiden, Dr. Thomas, 71720 Oberstenfeld (DE)

(57) **Zusammenfassung**

Es wird eine Heizeinrichtung (10) einer Fluidleitung, insbesondere einer Kurbelgehäuse-Entlüftungsleitung einer Brennkraftmaschine, insbesondere eines Kraftfahrzeugs, zur Temperierung wenigstens einer Innenwandung der Fluidleitung beschrieben. Der Heizeinrichtung (10) weist wenigstens ein Wärmeleitmittel (12) aus einem wärmeleitenden Material und wenigstens ein elektrisch betriebenes Heizelement (22) auf, das zur Erwärmung des Wärmeleitmittels (12) mit diesem in thermischem Kontakt steht. Eine elektrische Sicherung (34) ist in einem Strompfad (12, 22, 24, 26, 28, 30, 34, 36, 38, 40) des Heizelements (22) angeordnet. Wenigstens das Heizelement (22) und die Sicherung (34) bilden eine konstruktive Einheit.

## Beschreibung

### Technisches Gebiet

Die Erfindung betrifft eine Heizeinrichtung einer Fluidleitung, insbesondere einer Kurbelgehäuse-Entlüftungsleitung einer Brennkraftmaschine, insbesondere eines Kraftfahrzeugs, zur Temperierung wenigstens einer Innenwandung der Fluidleitung, mit wenigstens einem Wärmeleitmittel aus einem wärmeleitenden Material und mit wenigstens einem elektrisch betriebenen Heizelement, das zur Erwärmung des Wärmeleitmittels mit diesem in thermischem Kontakt steht.

### Stand der Technik

Derartige Heizeinrichtungen werden bekanntermaßen verwendet, um die Vereisung einer Blowby-Gasleitung oder einer Ansaugleitung einer Brennkraftmaschine eines Kraftfahrzeugs zu verhindern.

Aus der DE 10 2009 017 658 A1 ist eine Heizeinrichtung mit wenigstens einem Heizelement und wenigstens einem Wärmeleitmittel zur Temperierung wenigstens der Innenwandung einer Saugleitung eines Kurbelgehäuseentlüftungssystems einer Brennkraftmaschine bekannt. Das Heizelement befindet sich in einer Kammer, die einstückig an eine Umfangsseite der Saugleitung angeformt ist. Durch eine Verbindungsöffnung ragt das Heizelement hindurch, das mittels einer Feder gegen eine wärmeleitende Wandauskleidung der Saugleitung gepresst und mit dieser in Wärmekontakt und elektrischem Kontakt gehalten wird. Die Feder ist ihrerseits an ihrer dem Heizelement abgewandten Seite an einem ersten Steckkontakt abgestützt und steht mit diesem und dem Heizelement in elektrischem Kontakt. Durch eine zweite Verbindungsöffnung ragt eine zweite Feder, welche zwischen der Wandauskleidung und einem zweiten Steckkontakt eingespannt ist und zwischen diesen eine flexible elektrisch leitende Verbindung bildet. Die beiden Steckkontakte sind in einem Deckel der Kammer eingegossen. Die Steckkontakte laufen in einer Steckdose aus, die zur Aufnahme eines Steckers für die Stromversorgung geeignet ist.

Aufgabe der Erfindung ist es, eine Heizeinrichtung der eingangs genannten Art zu gestalten, die gegen einen Überstrom im elektrischen Stromkreis abgesichert ist. Insbesondere soll die Heizeinrichtung gegen einen Kurzschluss oder eine Überlastung abgesichert sein.

### Offenbarung der Erfindung

Diese Aufgabe wird erfindungsgemäß dadurch gelöst, dass eine elektrische Sicherung in einem Strompfad des Heizelements angeordnet ist und wenigstens das Heizelement und die Sicherung eine konstruktive Einheit bilden.

Erfindungsgemäß ist im Strompfad des Heizelements eine elektrische Sicherung angeordnet, welche selbsttätig den Strompfad unterbricht, falls ein vorgebbarer Grenzstrom im Strompfad überschritten wird. Der Grenzstrom, bei dem der Strompfad unterbrochen werden soll, kann dabei über die Ausgestaltung der Sicherung vorgegeben werden. Der Grenzstrom kann bevorzugt so gering sein, dass er nicht zu einer Temperatur führt, bei der die Heizeinrichtung und/oder die Fluidleitung insbesondere durch Schmelzen oder Brennen zerstört werden kann. Auf diese Weise können gefährlich hohe Stromstärken, die insbesondere bei einem Kurzschluss an dem Wärmeleitmittel auftreten können, verhindert werden. Bei der Verwendung der Heizeinrichtung in einem Kraftfahrzeug kann der Strompfad des Heizelements mit dem Bordnetz verbunden sein. Der Aufbau als konstruktive Einheit bewirkt, dass wenigstens das Heizelement und die Sicherung nicht einfach zerstörungsfrei voneinander getrennt werden können. Ferner kann der Aufbau des Heizelements und der Sicherung als konstruktive Einheit platzsparend und einfach realisiert werden. So sind keine separaten Halter für die Sicherung insbesondere an dem Gehäuse der Heizeinrichtung erforderlich. Auf diese Weise wird der bautechnische Aufwand verringert. Ferner kann durch die Zuordnung der Sicherung an dem Heizelement einfach und schnell beim Auslösen der Sicherung eine Störung am Heizelement identifiziert werden. Es ist so nicht erforderlich nach anderen Ursachen für die Störung, insbesondere Kabeldefekten, zu suchen. Eine Wartung der Heizeinrichtung kann so vereinfacht werden. Ferner können das Heizelement, die Sicherung und das Wärmeleitmittel eine konstruktive Einheit bilden, so dass auch keine einfache zerstörungsfreie Trennung vom Wärmeleitmittel möglich ist. Bevorzugt können die Bauteile in einem gemeinsamen Gehäuse integriert sein. Bei der Verwendung einer Sicherung, die beim Auslösen irreparabel zerstört wird, ist durch die konstruktive Einheit sichergestellt, dass bei einer Unterbrechung der Sicherung die gesamte Heizeinrichtung, zumindest das Heizelement und die Sicherung, ausgetauscht werden muss. Auf diese Weise wird die Betriebssicherheit erhöht, da ein Austausch lediglich der Sicherung ohne Beheben der Fehlerursache nicht möglich ist. Die Sicherung kann vorteilhafterweise eine Art Schmelzsicherung sein, bei der ein Teil der Sicherung bei Überschreiten des Grenzstroms schmilzt und den Strompfad unterbricht. Die Sicherung kann ein Metall oder ein anderes elektrisch leitendes, bei Überschreiten des Grenzstroms schmelzendes Material aufweisen. Das Heizelement und die Sicherung können als modulare Bauteile realisiert werden. Auf diese Weise können der Materialaufwand und der Montageaufwand verringert werden.

Bei einer vorteilhaften Ausführungsform können das Heizelement und die Sicherung mit einem Grundkörper, insbesondere einem Gehäusegrundkörper, der Heizeinrichtung fest verbunden sein. Das Heizelement und die Sicherung können vorteilhafterweise platzsparend in dem Grundkörper integriert sein. Das Heizelement und die elektrische Sicherung können so nach außen geschützt angeordnet werden. Ferner kann so verhindert werden, dass das Heizelement und die elektrische Sicherung einfach zerstörungsfrei voneinander getrennt werden können. Das Heizelement und/oder die Sicherung können vorteilhafterweise in einem Grundkörper aus Kunststoff insbesondere eingegossen oder eingespritzt sein.

Bei einer weiteren vorteilhaften Ausführungsform kann die elektrische Sicherung als Sollbruchstelle in einer elektrischen Leitung der Heizeinrichtung realisiert sein. Beim Überschreiten des definierten Grenzstromflusses kann die Sollbruchstelle ähnlich wie bei einer Schmelzsicherung schmelzen und damit der Strompfad unterbrochen werden. Eine derartige Sollbruchstelle kann einfach realisiert werden. Ferner kann die Sollbruchstelle einfach eine irreparable Unterbrechung ermöglichen.

Vorteilhafterweise kann eine Steckerfahne einer Steckverbindung eines Stromanschlusses der Heizeinrichtung zur Realisierung der Sicherung mit einer Sollbruchstelle, insbesondere einer Querschnittsverengung, ausgestattet sein, die bei einem überschreiten eines maximal zulässigen elektrischen Stromflusses durch die Steckerfahne bricht. Die Sicherung kann nach dem Prinzip einer Schmelzsicherung wirken. Vorteilhafterweise kann eine ohnehin vorhandene Steckerfahne verwendet werden. Ein zusätzliches Bauteil ist so nicht erforderlich. Die Querschnittsverengung an der Steckerfahne ist eine einfach realisierbare Sollbruchstelle. Mit der Sollbruchstelle kann eine irreparable Unterbrechung erzeugt werden, sodass es aufgrund der konstruktiven Einheit der Bauteile zwingend erforderlich ist, nach Zerstörung der Sicherung auch zumindest das Heizelement auszutauschen.

Bei einer weiteren vorteilhaften Ausführungsform kann die Sicherung visuell erkennbare Eigenschaften aufweisen, die sich bei einem Auslösen der Sicherung verändern. Vorteilhafterweise kann die Änderung von außerhalb eines etwaigen Gehäuses erkannt werden. Das Gehäuse kann hierzu ein entsprechendes Schauloch aufweisen. Bei der Verwendung einer Steckerfahne mit einer Sollbruchstelle kann die Steckerfahne vorteilhafterweise mit einem Material beschichtet sein, welches bei Zerstörung der Sollbruchstelle seine Farbe wechselt. So kann einfach der Zustand der Sicherung erkannt werden. Die Sicherung kann auch so ausgestaltet sein, dass das Auslösen der Sicherung mit einer Formänderung einher geht.

### Kurze Beschreibung der Zeichnungen

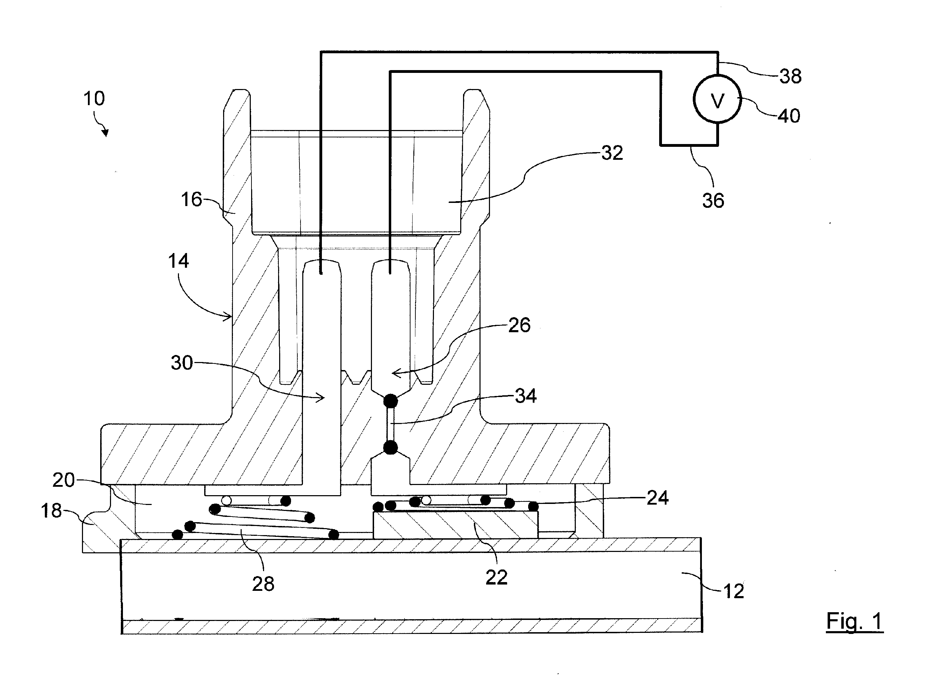

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigt schematisch
- Figur 1: einen Schnitt eines Heizrohrs einer Kurbelgehäuseentlüftungseinrichtung einer Brennkraftmaschine eines Kraftfahrzeugs.

In der Figur sind gleiche Bauteile mit gleichen Bezugszeichen versehen.

### Ausführungsform(en) der Erfindung

In der Figur 1 ist ein Heizrohr 10 einer ansonsten nicht gezeigten Kurbelgehäuseentlüftungsleitung einer Brennkraftmaschine eines Kraftfahrzeugs gezeigt.

Das Heizrohr 10 dient zur Temperierung der Kurbelgehäuseentlüftungsleitung. Durch die Temperierung wird verhindert, dass die Kurbelgehäuseentlüftungsleitung vereist. Das Heizrohr 10 verfügt über ein wärmeleitfähiges und elektrisch leitfähiges Wärmeleitungsrohr 12. Das Wärmeleitungsrohr 12 kann beispielsweise aus Kupfer sein. Das Wärmeleitungsrohr 12 umgibt die nicht gezeigte Kurbelgehäuseentlüftungsleitung oder ist in diese in Art einer Wandauskleidung eingebaut. Das Wärmeleitungsrohr 12 kann auch einen Abschnitt der Kurbelgehäuseentlüftungsleitung bilden. Das Heizrohr 10 ist von der Kurbelgehäuseentlüftungsleitung trennbar und kann so einfach ausgetauscht werden.

Ein zweiteiliges Gehäuse 14 aus Kunststoff, welches ebenfalls Bestandteil des Heizrohrs 10 ist, ist fest mit dem Wärmeleitungsrohr 12 verbunden. Das Gehäuse 14 verfügt über einen Anschlussgrundkörper 16 und einen Verbindungsgrundkörper 18. Der Verbindungsgrundkörper 18 hat eine umfänglich geschlossene Wand, welche mit einer Stirnseite fest und dicht an dem Anschlussgrundkörper 16 befestigt ist. Mit der anderen Stirnseite ist die Wand des Verbindungsgrundkörpers 18 an der Außenseite des Wärmeleitungsrohrs 12 befestigt.

Der Verbindungsgrundkörper 18 begrenzt mit der Außenseite des Wärmeleitungsrohrs 12 und dem Anschlussgrundkörper 16 eine Kammer 20. In der Kammer 20 befindet sich ein Heizelement 22 des Heizrohrs 10. Das Heizelement 22 wird mittels einer ersten Spiraldruckfeder 24 gegen die Außenseite des Wärmeleitungsrohrs 12 gepresst und mit dieser in Wärmekontakt und elektrischem Kontakt gehalten. Die erste Spiraldruckfeder 24 ist ihrerseits an ihrer dem Heizelement 22 abgewandten Seite an einer ersten Steckerfahne 26 abgestützt und steht mit dieser und mit dem Heizelement 22 in elektrischem Kontakt. Eine zweite Spiraldruckfeder 28 ist zwischen der Außenseite des Wärmeleitungsrohrs 12 und einer zweiten Steckerfahne 30 eingespannt und bildet zwischen diesen eine flexible elektrisch leitende Verbindung.

Die beiden Steckerfahnen 26 und 30 sind in dem Anschlussgrundkörper 16 eingegossen. Die Steckerfahnen 26 und 30 laufen in einer Steckdose 32 des Anschlussgrundkörpers 16 aus, die zur Aufnahme eines entsprechenden, in der Figur 1 nicht gezeigten, Steckers für die Stromversorgung geeignet ist. Die Steckerfahnen 26 und 30 bilden mit dem Heizelement 22 und den Spiraldruckfedern 24 und 28 in dem Gehäuse 14 und dem Wärmeleitungsrohr 12 eine konstruktive Einheit, was bedeutet, dass die Steckerfahnen 26 und 30 nicht aus dem Gehäuse 14 entfernt und von dem Heizelement 22 und dem Wärmeleitungsrohr 12 getrennt werden können, ohne dass das Gehäuse 14 und/oder die Steckerfahnen 26 und 30 dabei zerstört werden.

Die erste Steckerfahne 26 ist mit einer Querschnittsverengung 34 versehen, welche als Sollbruchstelle dient. Die Querschnittsverengung 34 befindet sich in einem von dem Anschlussgrundkörper 16 umgossenen Bereich des Anschlussgrundkörpers 16. Der Anschlussgrundkörper 16 verfügt im Bereich der Querschnittverengung 34 über ein in der Figur 1 nicht sichtbares Schauloch, durch das die Querschnittsverengung 34 von außen erkennbar ist.

Die Steckerfahnen 26 sind jeweils über eine Stromleitung 36 und 38 mit einer Spannungsquelle 40 eines Bordnetzes des Kraftfahrzeuges verbunden. Die Stromleitungen 36 und 38 sind ebenso wie die Spannungsquelle 40 in der Figur 1 lediglich schematisch angedeutet. In der Realität sind die Stromleitungen 36 und 38 mit dem entsprechenden Stecker zum Einstecken in die Steckdose 32 verbunden.

Beim Betrieb des Heizrohrs 10 bilden die Stromleitungen 36 und 38, die Steckerfahne 26 und 30, die Federn 24 und 28, das Heizelement 22 und das Wärmeleitungsrohr 12 mit der Spannungsquelle 40 einen Strompfad in Art eines Stromkreises. Bei geschlossenem Stromkreis erwärmen sich aufgrund des Stromflusses das Heizelement 22 und das Wärmeleitungsrohr 12. Das Wärmeleitungsrohr 12 temperiert die Kurbelgehäuseentlüftungsleitung und schützt diese vor Vereisung.

Tritt in dem Stromkreis eine Stromerhöhung beispielsweise infolge eines Kurzschlusses im Bereich des Heizelements 22 oder aufgrund einer andersartigen Überlastung auf, so erhitzt sich zunächst die Querschnittsverengung 34 der ersten Steckerfahne 26. Die Querschnittsverengung 34 ist so ausgelegt, dass sie bei Überschreiten einer vorgegebenen maximalen Grenzstromstärke, beispielsweise 6 Ampere, schmilzt. Dadurch wird der Stromkreis im Bereich der Querschnittsverengung 34 unterbrochen. Die Steckerfahne 26 wirkt so in Art einer elektrischen Schmelzsicherung, die bei Überschreiten des Grenzstroms irreparabel zerstört wird. Die Querschnittsverengung 34 ist in Abstimmung mit dem Material und der Ausgestaltung des Gehäuses 14 so gestaltet, dass sie bei einer Temperatur schmilzt, die für das Gehäuse 14 in die Kurbelgehäuseentlüftungsleitung unschädlich ist. Durch das Schmelzen der Querschnittsverengung 34 wird verhindert, dass sich das Gehäuse 14 und unter Umständen sogar die Kurbelgehäuseentlüftungsleitung zu stark aufheizt, schmilzt oder gar zu brennen beginnt.

Die Zerstörung der Querschnittsverengung 34 ist durch das Schauloch von außen sichtbar. So kann einfach das Vorliegen einer Störung, beispielsweise eines Kurzschlusses, im Bereich des Heizelementes 22 identifiziert werden.

Da das Heizrohr 10 als austauschbares Modul aufgebaut ist, kann die zerstörte Steckerfahne 26 nur komplett mit dem gesamten Heizrohr 10 ausgetauscht werden. So wird die Betriebssicherheit erhöht, da der Stromkreis nicht geschlossen werden kann, ohne dass der Fehler im Bereich des Heizelements 22 behoben wird.

Bei dem oben beschriebenen Ausführungsbeispiel eines Heizrohrs 10 sind unter anderem folgende Modifikationen möglich:
Die Erfindung ist nicht beschränkt auf ein Heizrohr 10 einer Kurbelgehäuseentlüftungsleitung einer Brennkraftmaschine. Vielmehr kann sie auch bei andersartigen Fluidleitungen verwendet werden. Sie kann auch außerhalb der Kraftfahrzeugtechnik, beispielsweise bei Industriemotoren, eingesetzt werden. Die Erfindung kann auch zur Temperierung von Flüssigkeitsleitungen, beispielsweise Kraftstoff- oder Ölleitungen, verwendet werden.

Das Wärmeleitungsrohr 12 kann statt aus Kupfer auch aus einem andersartigen wärmeleitenden Material, beispielsweise einem Metall, sein. Für das Wärmeleitungsrohr 12 kann auch ein Material verwendet werden, welches nicht oder nur geringfügig elektrisch leitfähig ist. In diesem Fall kann das Heizelement 22 in einem andersartigen Strompfad angeordnet sein, welcher das Wärmeleitungsrohr 12 nicht enthält.

Statt mit den Spiraldruckfedern 24 und 28 und den Steckerfahnen 26 und 30 kann der Strompfad im Heizrohr 10 auch in anderer Weise realisiert sein. Das Heizelement 22 kann beispielsweise direkt mit einer entsprechenden elektrischen Leitung verbunden, beispielsweise gelötet, geklemmt oder geschweißt, sein.

Statt der Steckerfahne 26 mit der Querschnittsverengung 34 kann auch eine andersartige elektrische Sicherung in dem Strompfad des Heizrohrs 10 angeordnet sein, die wenigstens mit dem Heizelement 22 eine konstruktive Einheit bilden. Es kann beispielsweise auch eine andersartige Schmelzsicherung verwendet werden.

Statt der Querschnittsverengung 34, welche bei einem Überstrom irreparabel zerstört wird, kann auch eine andersartige Sicherung verwendet werden, die nach einer Unterbrechung wieder aktiviert werden kann.

Die erste Steckerfahne 26 kann im Bereich der Querschnittsverengung 34 alternativ oder zusätzlich mit einer andersartigen visuellen Eigenschaft ausgestattet sein, die sich beim Auslösen der Sicherung verändert. So kann beispielsweise die erste Steckerfahne 26 mit einer speziellen Beschichtung versehen sein, welche sich beim Auslösen der Sicherung farblich verändert, beispielsweise von grau oder schwarz zu silberfarben oder umgekehrt.

Auf die sich ändernden visuellen Eigenschaften der Sicherung kann auch verzichtet werden. In diesem Fall kann auch auf das Schauloch im Gehäuse 14 verzichtet werden.

Der Grenzstrom, bei dem die Querschnittsverengung 34 schmilzt, also die elektrische Sicherung auslöst, kann auch kleiner oder größer als 6 Ampere sein.

## Patentansprüche

1. Heizeinrichtung (10) einer Fluidleitung, insbesondere einer KurbelgehäuseEntlüftungsleitung einer Brennkraftmaschine, insbesondere eines Kraftfahrzeugs, zur Temperierung wenigstens einer Innenwandung der Fluidleitung, mit wenigstens einem Wärmeleitmittel (12) aus einem wärmeleitenden Material und mit wenigstens einem elektrisch betriebenen Heizelement (22), das zur Erwärmung des Wärmeleitmittels (12) mit diesem in thermischem Kontakt steht, **dadurch gekennzeichnet, dass** eine elektrische Sicherung (34) in einem Strompfad (12, 22, 24, 26, 28, 30, 34, 36, 38, 40) des Heizelements (22) angeordnet ist und wenigstens das Heizelement (22) und die Sicherung (34) eine konstruktive Einheit bilden.

2. Heizeinrichtung nach Anspruch 1, **dadurch gekennzeichnet, dass** das Heizelement (22) und die elektrische Sicherung (34) mit einem Grundkörper, insbesondere einem Gehäusegrundkörper (14), der Heizeinrichtung (10) fest verbunden sind.

3. Heizeinrichtung nach Anspruch 1 oder 2, **dadurch gekennzeichnet, dass** die Sicherung als Sollbruchstelle (34) in einer elektrischen Leitung (26) der Heizeinrichtung (10) realisiert ist.

4. Heizeinrichtung nach einem der vorigen Ansprüche, **dadurch gekennzeichnet, dass** eine Steckerfahne (26) einer Steckverbindung eines Stromanschlusses der Heizeinrichtung (10) zur Realisierung der Sicherung mit einer Sollbruchstelle, insbesondere einer Querschnittsverengung (34), ausgestattet ist, die bei einem Überschreiten eines maximal zulässigen elektrischen Stromflusses durch die Steckerfahne (26) bricht.

5. Heizeinrichtung nach einem der vorigen Ansprüche, **dadurch gekennzeichnet, dass** die elektrische Sicherung (34) visuell erkennbare Eigenschaften aufweist, die sich bei einem Auslösen der Sicherung (34) verändern.
